# EUROPEAN PATENT SPECIFICATION

(11) **EP 1 347 101 B1**
(45) Date of publication and mention of the grant of the patent: **01.10.2008**
(21) Application number: 01272861.4
(22) Date of filing: 26.12.2001
(51) Int. Cl.: E02B 3/12

(54) **METHOD AND STRUCTURE FOR SOIL AND SHORE EROSION PROTECTION**
VERFAHREN UND KONSTRUKTION ZUM SCHUTZ VOR FLUSSBETT- UND UFEREROSION
PROCEDE ET STRUCTURE DESTINEE A LA PROTECTION DU SOL OU DU RIVAGE CONTRE DE L'EROSION

(30) Priority: 28.12.2000 JP 2000402632
(43) Date of publication of application: 24.09.2003
(73) Proprietor: Fukui, Tomio, Tokyo 154-0011 (JP)
(72) Inventor: Fukui, Tomio, Tokyo 154-0011 (JP)
(74) Representative: Piésold, Alexander James
(86) International application number: PCT/JP2001/011429
(87) International publication number: WO 2002/053842

(56) References cited:
- EP-A- 0 937 823
- EP-A1- 0 937 823
- DE-U- 9 317 168
- JP-U- 55 040 061
- US-A- 1 748 444
- US-A- 2 092 183
- US-A- 5 158 395
- US-A- 5 951 202
- US-E- R E16 976

## Description

This invention relates to a method and a structure for easily and effectively performing erosion and torrent control and, preferably, shore protection works for a torrent located between mountains, a river, and the like, without damaging the natural environment.

The bed of a torrent, stream, or river (hereinafter called a "torrent bed") is always eroded by sand and stones that are carried down by the stream. Especially, in case of a flood, a rapid and powerful avalanche of sand and stones is generated, and it greatly erodes the torrent bed. If no control strategy is taken for such erosions, the base of the shore of a torrent, a riverbank, or an embankment (hereinafter just called a "shore") is deeply excised, as well as the torrent bed being excised. This causes the shore to collapse and hence causes a large amount of earth, sand, and the like to be deposited on the torrent bed. This further increases the risk of the generation of an avalanche of sand and stones.

Conventionally, to prevent the shore and bed of a torrent from collapsing due to such an avalanche of sand and stones, torrent works such as debris barrier works, consolidation works, shore protection works, or the like have been carried out in a river basin.

Debris barrier (dam) works, which have been most widely constructed from olden times, are to provide a series of dams, fences, or the like at proper intervals on a torrent bed transversely of a torrent to cause earth, sand, and gravels to be deposited upstream of the series of dams, etc., and to raise and consolidate the torrent bed to weaken the power of the water flow and any avalanche of sand and stones.

Consolidation works are to solidify a torrent bed by using gravels or concrete. Shore protection works are to cover the sidewall of the shore by concrete or the like. By performing these works the bed and shore of a torrent have been protected from erosion.

However, a torrent bed extends over a long distance in its river basin, and it becomes broader as it goes downstream. Therefore, if the conventional methods are used to solidify a torrent bed to weaken the power of the water flow, many largescale dams must be constructed, and the sidewall of the shore must be covered with concrete. This is a problem since it requires a huge number of works and huge costs.

This invention was conceived to solve that problem. It aims to provide a method of construction works for preventing the bed and shore of a torrent from being eroded by using steel cables and steel nets, without requiring a huge number of works or huge costs. Since a net has less resistance against a water flow and the like that flow down, but it has great resistance against any force that tends to push it up, it is extremely effective to resolve the problem.

It is known from EP-A-0937823 to provide a method for controlling a torrent and preventing a torrent bed from being eroded, comprising: fixing at least two longitudinal cables directly or indirectly to at least one lodgment; and connecting the longitudinal cables by at least two lateral cables at intervals. The document discloses a technique in which a barrier-like member, for example a wire cylinder filled with stones, is moored by using the longitudinal cables.

USRE-A-16976 discloses the use of longitudinal cables to moor a rigid barrier which supports wire mesh or fabric.

US-A-2092183 discloses the use of open-work mats anchored along the bank of a stream to prevent soil erosion.

According to one aspect, the present invention is characterised by providing at least two substantially flat nets, the number of nets corresponding to the number of lateral cables, and mooring the at least two nets by the longitudinal cables and the lateral cables such that (i) the nets are arranged at intervals in the direction of a water flow of the torrent, and (ii) each net is placed on the torrent bed so that meshes of the net engage with gravels on the torrent bed and gravels that come down from upstream regions onto the net:

According to another aspect, the invention provides a method for controlling a torrent and preventing a torrent bed from being eroded, comprising: fixing at least two longitudinal cables directly or indirectly to at least one lodgment; characterised by providing at least two substantially flat nets; and mooring the nets by the longitudinal cables and mooring cables connected to the longitudinal cables so that (i) the nets are arranged at intervals in the direction of a water flow of the torrent and (ii) each net is placed on the torrent bed so that meshes of the net engage with gravels on the torrent bed and gravels that come down from upstream regions onto the net.

According to another aspect, the invention provides a structure for controlling a torrent and preventing a torrent bed from being eroded, comprising: at least one lodgment; at least two longitudinal cables directly or indirectly connected to the at least one lodgment; and at least one lateral cable connecting the longitudinal cables at intervals; characterised by at least one net, the number of nets corresponding to the number of lateral cables, moored by the longitudinal cables and the at least one lateral cable such that the at least one net is placed on the torrent bed so that meshes of the net engage with gravels on the torrent bed and gravels that come down from upstream regions onto the net.

According to another aspect, the invention provides a structure for controlling a torrent and preventing a torrent bed from being eroded, comprising: at least one lodgment; at least two longitudinal cables directly or indirectly connected to the at least one lodgment; characterised by at least one substantially flat net; and mooring cables connecting the at least one net to the longitudinal cables such that the at least one net is placed on the torrent bed so that meshes of the net engage with gravels on the torrent bed and gravels that come down from upstream regions onto the net.

The lodgments (fixing points or places) may be trees, rocks, or artificial structures.

The step of fixing the longitudinal cables indirectly to the lodgments may include the steps of connecting two lodgments by an auxiliary cable and connecting the longitudinal cables to the auxiliary cable.

Further, the method of the present invention for erosion and torrent control works may include a step of connecting fence members to the nets and/or the longitudinal and lateral cables. Each fence member may be a series of concrete blocks connected by elongated concertina wires filled with stones.

The method for shore protection works may further include the steps of connecting at least two longitudinal cables directly or indirectly to third lodgments and mooring the net by the longitudinal cables and mooring cables that are connected to the longitudinal cables. The third lodgments may be trees, rocks, or artificial structures.

A further preferred aspect of the present invention is a method for erosion and torrent control and shore protection works to prevent the bed and shore of a torrent from being eroded, comprising the steps of fixing at least two longitudinal cables directly or indirectly to first lodgments; providing at least two nets so that the nets are arranged at proper intervals in the direction of the water flow of a torrent and mooring the nets by the longitudinal cables and mooring cables that are connected to the longitudinal cables so that the nets face the water flow; providing at least two second secured lodgments along the torrent shore or outside thereof; fixing the upper sides of the nets to the second lodgments so that the nets hang down on the surface of the torrent shore; and connecting lower sides of the nets to a third lodgment that is provided on the torrent bed or to one of the longitudinal cables.

The method for erosion and torrent control and shore protection works may include a step of providing an auxiliary member to be moored between the second lodgments and the third lodgment or one of the longitudinal cables before the step of fixing the upper sides of the nets to the second lodgments. The auxiliary mooring member may be a cover in the form of a bar blind, or a grating, using bars of wood, concrete, or plastic, or may be a sheet of cloth.

The first lodgments may be trees, rocks, or artificial structures; the second lodgments may be artificial structures or trees; and the third lodgment may be an artificial structure or a rock.

According to the present invention, since protection members that are made of e.g. steel nets are used for a torrent bed and/or shore, etc., for erosion and torrent control and/or shore protection, they can protect the torrent bed and shore, etc., without requiring a huge number of works or huge costs.

Certain preferred embodiments of the invention will now be described by way of example and with reference to the accompanying drawings, in which:
Figure 1 is a schematic view of a first embodiment of the present invention, i.e., a structure for erosion and torrent control works.
Figure 2 is a schematic view of a second embodiment of the present invention, i.e., a structure for erosion and torrent control works;
Figure 3 is a schematic view of a structure for shore protection works (not an embodiment of the present invention);
Figure 4 is a schematic view of a structure for shore protection works (not an embodiment of the present invention);
Figure 5 is a schematic view of a third embodiment of the present invention, i.e., a structure for erosion and torrent control and shore protection works; and
Figure 6 is a schematic view of a fourth embodiment of the present invention, i.e., a structure for erosion and torrent control and shore protection works.

In the embodiments, steel cables and steel nets, etc. (nets, etc., made of steel or iron wire, hereinafter called "nets") are used for easily and effectively protecting a torrent bed from erosion.

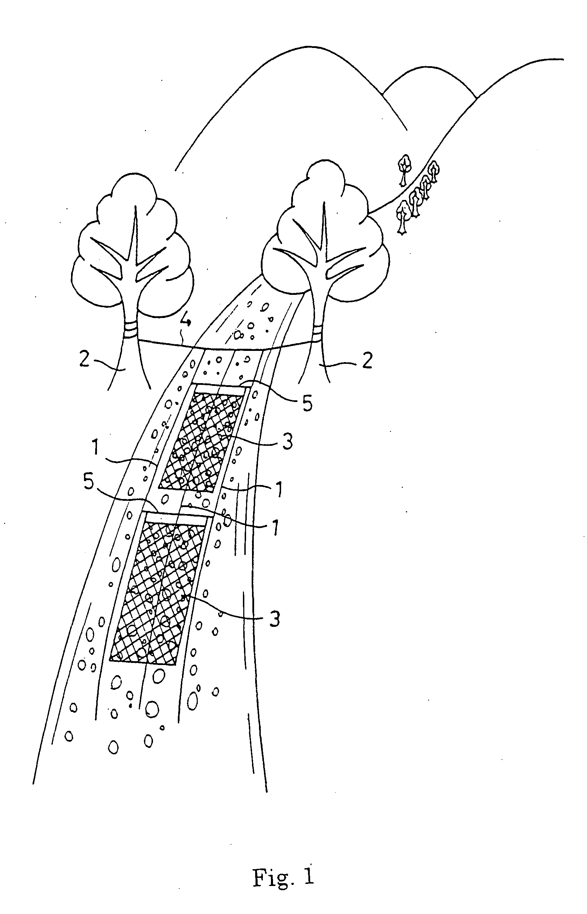

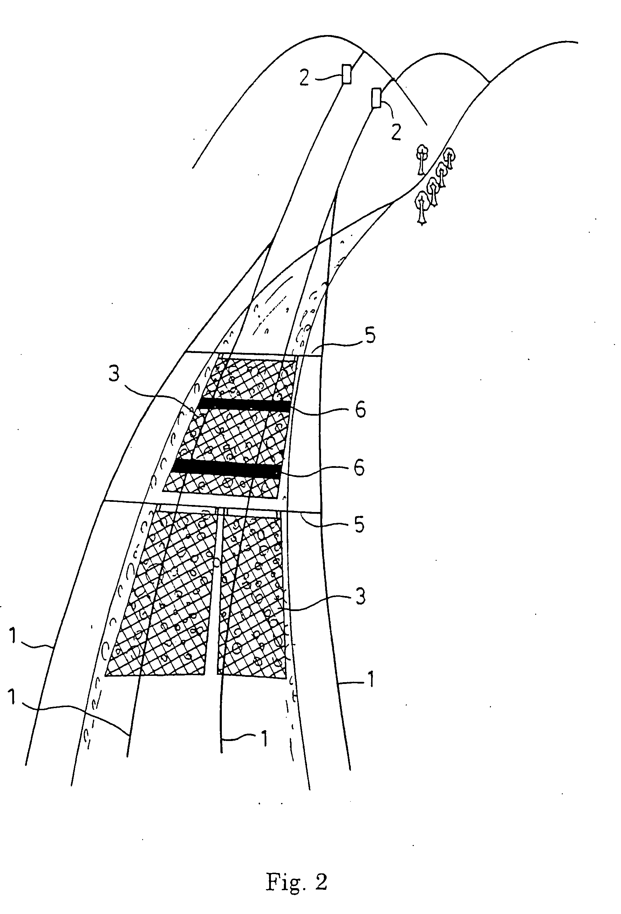

In Figures 1 and 2 the first embodiment of the present invention, i.e., a construction method and structure for erosion and torrent control works, is explained.

Figure 1 is a schematic view of the structure of the first embodiment, showing the construction method and structure for erosion and torrent control works. Figure 1 shows a plurality of longitudinal cables 1, two lodgments (trees in this embodiment) 2, two members 3 to be moored, an auxiliary cable 4, and two lateral cables 5.

The longitudinal cables 1 are connected to the auxiliary cable 4, which is secured to the lodgments 2 located at the opposing riverbanks or shores. Thus the longitudinal cables 1 are fixed to the lodgments 2 through the auxiliary cable 4. Each member 3 to be moored is a net, which is the characteristic part of the present invention, and which is connected, for covering the torrent bed, to the longitudinal cables 1 (three cables in the embodiment) and one lateral cable 5.

In the present invention the material of the longitudinal cables 1, auxiliary cable 4, lateral cable 5, and the members 3 to be moored is not limited to a special one and may be any one that has the desired strength, and that is durable, especially against water. For example, the longitudinal cables 1, the auxiliary cable 4, and the lateral cable 5 may be steel cables, and the nets may be steel nets. Steel cables and nets that are available from commercial markets have enough strength to moor the nets by the cables if the nets are properly moored, so that the cables are not cut by any natural forces, or so that the moored members are not shifted by a large amount by the natural forces, to allow a large number of stones deposited in the members to flow down.

The cables may be selected from those specified by JIS G 3525, etc., which have various fracture strengths depending on their surfaces, whether the surfaces are treated or untreated, and their method of being twisted and their diameter. Accordingly, the cables may be selected by considering various conditions such as the size of the sand, gravels and stones in the site where the structure of the present invention is to be installed, the speed of the water flow of a torrent, etc.

Trees, or rocks that are completely fixed or immovable, or artificial structure such as concrete blocks may be used as the lodgments 2.

In this embodiment trees are used as the lodgments 2. The trees, which act as the lodgments, need not be large ones, but they must be ones that have roots extending widely to some degree. If it is doubted whether two trees (like in this embodiment) have enough strength to support the structure of the invention, the auxiliary cable 4 may be connected to more than two trees. This strategy can be applied to the other embodiments explained below. Especially, trees can be effectively used as the lodgments 2 in erosion and torrent control and shore protection works for a torrent.

The auxiliary cable 4 can be secured to the lodgments 2 in any known manner, such as by encircling trees, by tying it to trees, and by using fixing hardware. Known clamps or the like can be used to easily connect the longitudinal cables 1 and the auxiliary cable 4. Further, the members 3 to be moored can be moored by the longitudinal cables 1 by using any known method. In conclusion, any method can be used if the desirable strength of cables is utilized and if the members to be moored and the sand and stones in the torrent bed do not flow down.

Generally, sand flows out from a torrent bed, and there many large and small hard gravels are deposited. In this embodiment the torrent bed is covered with some nets, which are moored members 3, to stop the gravels from flowing down, to thereby form the natural and stable torrent bed, while longitudinal cables 1 that are connected to stable lodgments are disposed inside and outside the torrent and connected to each other by lateral cables 5 to moor and fix the nets by the longitudinal and lateral cables 1, 5.

Although the size and shape of the gravels, sand, and stone, which are caught in the nets, are various and not uniform, almost all of the gravels, etc., will engage the mesh of the nets if the size of the mesh is properly selected. Accordingly, the flow down of gravels, etc., is greatly confined as a whole. Further, once the nets are installed, other gravels that flow down from upstream are deposited on the nets. Thus the gravels, etc., that are covered by the nets are further fixed in the torrent bed, thereby forming a stable torrent bed. If a more stable torrent bed is required to be formed, two or three nets of the structure may be superimposed. In that case, the number of trees as lodgments must be increased.

According to the embodiment, the structure explained above prevents the gravels deposited in the torrent bed from flowing down, thereby making the torrent bed stable and preventing it from being eroded.

If lesser number of gravels exist in the torrent bed where the nets are installed than the required number, rocks or timbers, etc., may be artificially placed there.

Fig. 2 is a schematic view of the second embodiment of the present invention, for explaining a method and structure for erosion and torrent control works for a torrent or a river. This second embodiment differs from the first embodiment in that the lodgments 2 are located on one side of a mountain, and in that fence members 6 are used, instead of the auxiliary cable 4, to moor the members 3 to be moored by longitudinal cables 1.

In Fig. 2 the longitudinal cables 1 and lateral cables 5 that are connected to the longitudinal cables 1 at proper intervals moor the members (nets) 3. The longitudinal cables 1, which moor the members 3, are connected to the lodgments located on one side of a mountain beside which the torrent or river extends. The longitudinal cables may extend beyond the lodgments, which are located at the mountainside, and beyond the top of the mountain so that they may be also fixed to one optional lodgment or lodgments that are located on the opposite side (not shown) of the mountain.

The size, location, material, etc., of artificial structures available as the lodgments 2 may be selected on a case-by-case basis. Since there may be a case where there is no suitable tree or there is an insufficient number of trees available as lodgments 2, because of a steep gorge where just an insufficient number of trees exist at the lodging place, installing lodgments 2 such as cubic or cylindrical concrete blocks or the like is recommended.

If it is considered that just the nets that are used in the first embodiment are insufficient to prevent the gravels in the nets from flowing down due to the rapid water flow of the torrent, heavy fence members 6 may be provided on the upper surfaces or under the lower surfaces of the nets, perpendicularly to the flow of the torrent. Each fence member 6 may be a series of concrete blocks jointed by elongated concertina wires filled with stones, and it may be moored by the nets and/or the longitudinal and lateral cables 1, 4 to more effectively prevent the gravels from flowing down.

If just one fence member 6 is provided, many gravels would lodge at it and an excessive load would be applied to one or more longitudinal cables. To prevent this problem, installing a plurality of fence members 6 at proper intervals along the torrent and mooring them to the nets or the longitudinal cables is desirable.

According to the first and second embodiments of the present invention, a broad torrent bed is consolidated entirely or partly. It is considered that performing the works of the embodiments would not produce environmental despoliation. Further, since after the torrent bed is covered with the nets almost the entire natural convex and concave shape produced by the gravels may be maintained, such a torrent bed is also effective to weaken the power of the stream of the torrent.

Further, according to the present invention, a torrent bed located just downstream of dams, fences, or the like is easily prevented from being eroded by the water pressure of a stream that falls rapidly (i.e., preventing an "erosion phenomena").

A ridge of a mountain, trees, an artificial structure, and dams may be used for providing stable lodgments that can support the great tension applied to the longitudinal cables 1 in the same way as the debris barrier, etc., which use cables, disclosed in one prior-art publication (Japanese Patent Application No. 8-311146, or EP-A-0937823 or WO9B/17869).

If just one member 3 to be moored is used, it must be long one. Thus it is desirable to use two or more members and to dispose them in the direction from upstream to downstream. The members 3 to be moored may be connected to each other by tie cables (not shown). In that case, stones, etc. may flow between the members. However, the force that acts on the members is distributed. Thus this distribution prevents the structure of the present invention from collapsing.

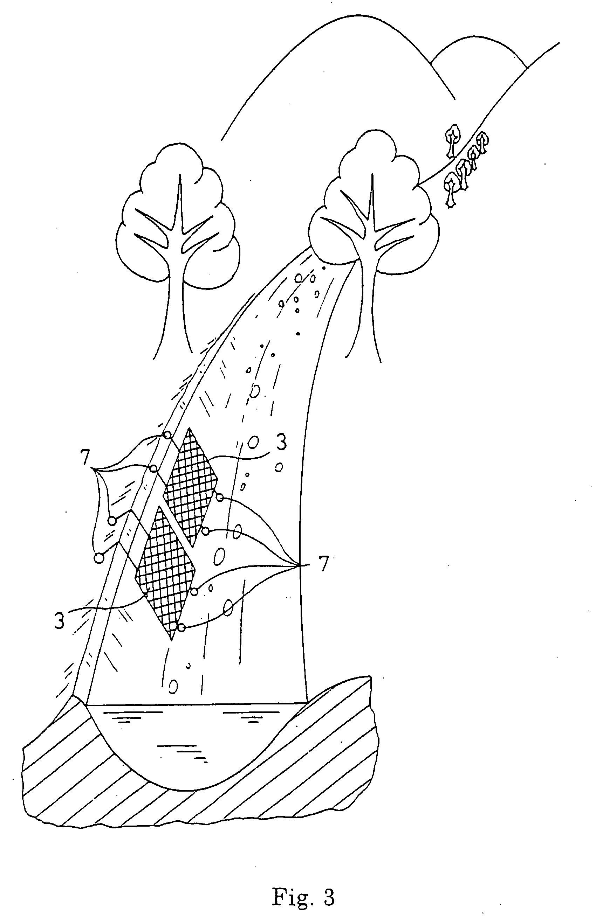

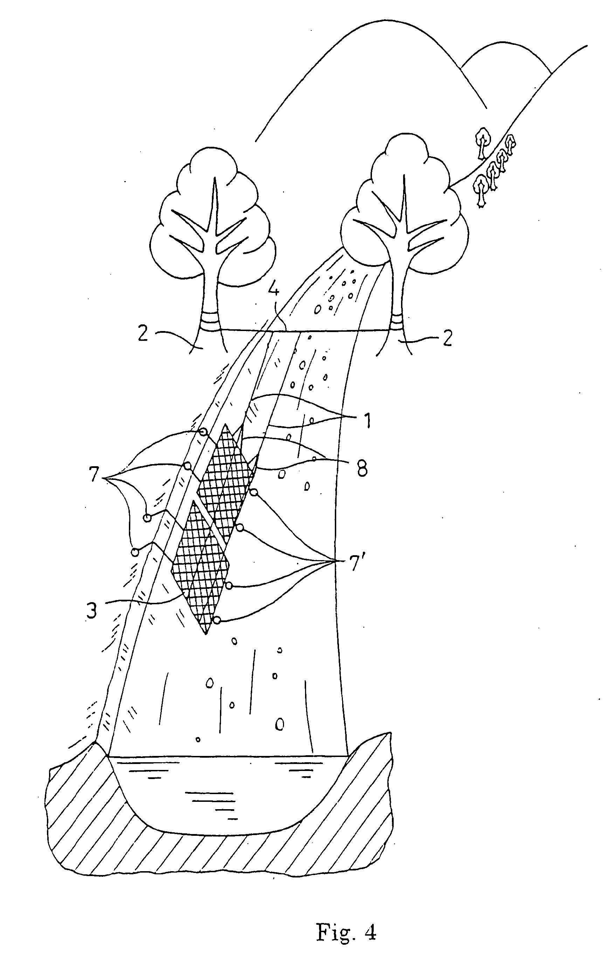

Further embodiments of the method and structure of the present invention for shore protection works for the shore of a torrent, a riverbank, or an embankment are now explained by reference to Figs. 3 and 4.

Fig. 3 is a schematic view for showing a method and structure for shore protection works. In Fig. 3, nets 3, as members to be moored, are connected at their top sides to stable lodgments 7 that are provided at the shore of the torrent (or outside the embankment) so that the nets 3 hang on the surface of the torrent and are also connected at their lower sides to other lodgments 7' that are located in the torrent bed so that the nets are fixed on the surface. The lodgments 7' may be weights, for example, rocks, as long as they can act as the lodgments.

This structure aims to protect the shore. Thus the moored members 3 are arranged along the shore. In other words, the longitudinal direction of the nets 3 is parallel to the flow of the torrent.

Since the shore has various shapes, the shapes of the nets may be such ones that conform to the shapes of the shore. The nets are preferably long ones arranged along the torrent if they aim to protect the shore as discussed above.

According to the Figure 3 structure, after the nets are placed on the surface to cover it, sand, stones, and gravels have been deposited behind and around the backsides of the nets. The gravels, etc., do not flow down, and thus effectively prevent the shore from being eroded.

If the nets are not sufficiently secured to the shore by the method discussed above (for example, if the soil of the shore is soft clay, or if the speed of the water flow is great), some other lodgments 2 must be provided. In that case, two or more trees that are located long the shore may be selected as lodgments 2, and a longitudinal cable may be connected between the lodgments 2. The longitudinal cable may moor the members 3 so that the moored members hang on the surface of the shore.

Fig. 4 is a schematic view for illustrating a method and structure for shore protection works. This is similar to the Figure 3, structure but differs from it in that longitudinal cables 1 are used to secure the members 3 to lodgments.

In the method of Fig. 3, in case of a flood the sand and gravels behind the nets may be caused to flow down by a large amount of rapidly running water. To prevent this problem, using the longitudinal cables 1 that are used in the first embodiment (Fig. 1) has been conceived.

In Fig. 4, since the longitudinal cables 1 are connected to an auxiliary cable 4 that is secured to stable or immovable lodgments (trees), the longitudinal cables 1 are fixed to the lodgments 2 through the auxiliary cable 4. The longitudinal cables 1, which are arranged along the torrent, are disposed in the water of the torrent or in the space above it. Subjects 3 to be moored, which are similar to those in the first embodiment, are moored by the longitudinal cables 1 and a mooring cable 8. Thus the members 3 are more securely fixed to the shore.

The shore is thus protected from erosion and collapse, since the base of the shore (including an embankment) is effectively protected from erosion.

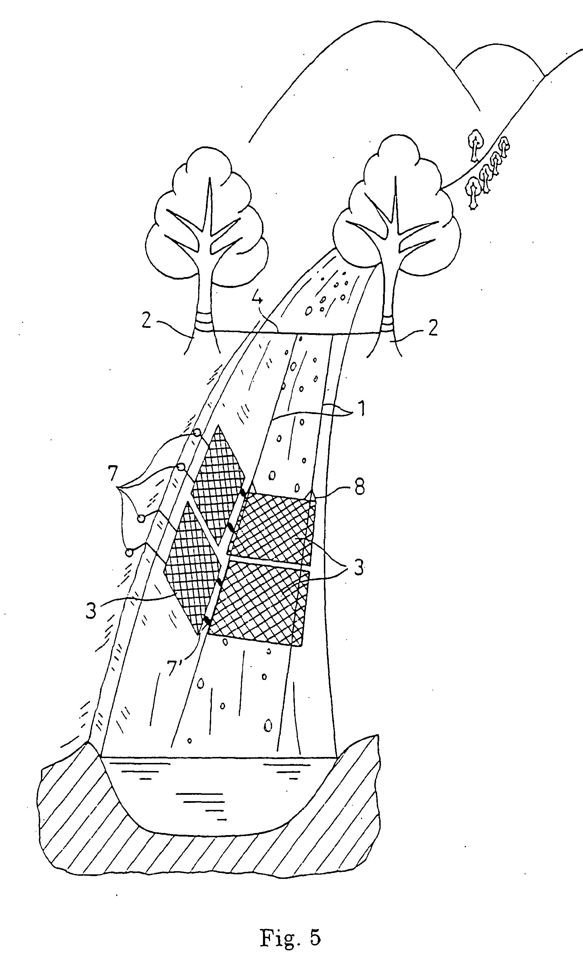

Fig. 5 is schematic view showing the third embodiment of the method and structure of the present invention for erosion and torrent control works and shore protection works. The structure in Fig. 5 has both the structure shown in Fig. 1 and the structure shown in Fig. 3.

In Fig. 5 two members 3, to be moored, that act for protecting the torrent bed are connected to longitudinal cables 1 and a mooring cable 8, while two other members 3, to be moored, that act for protecting the shore are connected to lodgments 7 at their top sides and at their lower sides to one of the longitudinal cables 1 or fixing lodgments 7' (weights that can act as lodgments, for example, rocks) located in the torrent bed.

Thus, according to the method of this embodiment, by using the longitudinal cables 1 for mooring not only the members 3 for the torrent bed, but also the members 3 for the shore, the torrent bed and shore are more stably protected.

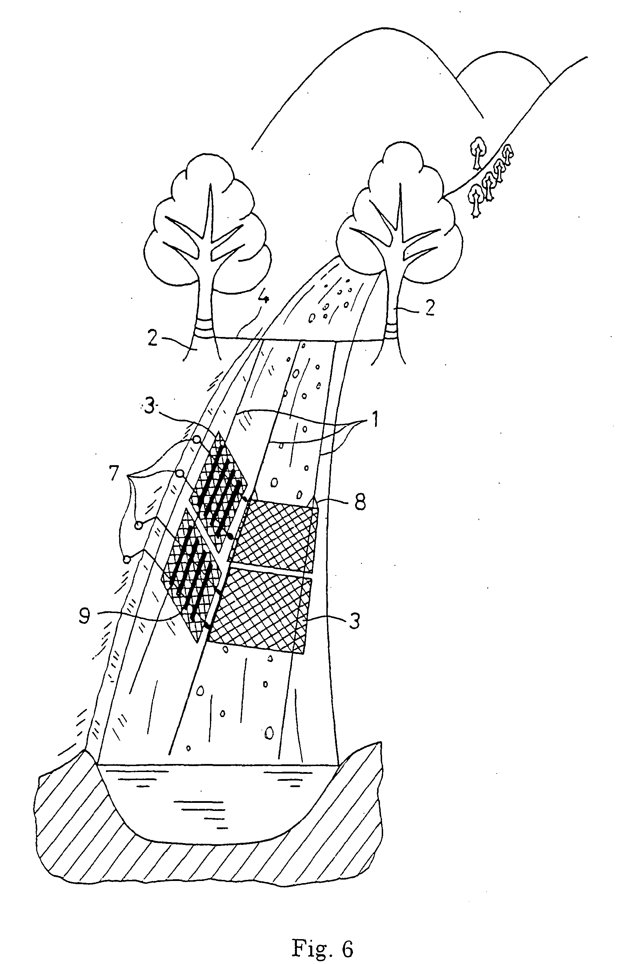

Fig. 6 is a schematic view of the fourth embodiment of the method and structure of the invention for erosion and torrent control works and shore protection works. In the fourth embodiment the structure of it is almost the same as that in the third embodiment, but differs from it in that moored auxiliary members 9 cover the shore before or after the two moored members 3 that act to protect the shore cover it.

In the third embodiment (Fig. 5) the shore may be eroded by the flow of water that passes through the net 3 (members) if the soil of the shore is brittle. To prevent this, using the auxiliary members 9 to be moored, before or after the placement of the members 3 to be moored, has been conceived.

In Fig. 6 each auxiliary member 9 to be moored has two cables that connect two lodgments 7 located above the member 9 to one of the longitudinal cables 1 and a plurality of wood bars perpendicularly connected to the two cables at predetermined intervals. The length of the wood bars is preferably greater than the distance between the two cables, so that they are securely connected to the two cables.

The auxiliary members 9 to be moored are placed on the surface of the shore before or after the members 3 to be moored for covering the shore are placed.

According to this embodiment, since both the auxiliary members 9 to be moored and the members 3 to be moored cover the shore, the shore is well protected from erosion even if the soil of it is brittle.

The wood bars of each auxiliary member 9 may be replaced with a fence member similar to the fence member 6 in the second embodiment, which is made of anticorrosion material, or concrete or plastic bars. Although the auxiliary member 9 shown in Fig. 6 is a cover in the form of a bar blind, it may be a sheet of cloth having the same size as that of the member 3 to be moored. Any material that can protect the shore may be used for the cover or sheet.

According to this embodiment of the method for erosion and torrent control and shore protection works of the present invention, since the steel nets are used for protecting the torrent bed and shore, plants can grow in the meshes of the nets. Thus this structure can more securely protect the bed and shore from erosion and can approximate the appearance of the shore in its natural condition.

According to this embodiment of the method for erosion and torrent control and shore protection works of the present invention, since nets are used as the member to be moored, the size of the mesh of the nets may be properly selected depending on the soil of the torrent bed and shore and the speed of the torrent for the purposes of controlling erosion and approximating the appearance of the torrent in its natural condition.

## Claims

1. A method for controlling a torrent and preventing a torrent bed from being eroded, comprising:
fixing at least two longitudinal cables (1) directly or indirectly to at least one lodgment (2); and
connecting the longitudinal cables by at least two lateral cables (5) at intervals;
**characterised by** providing at least two substantially flat nets (3), the number of nets corresponding to the number of lateral cables; ,
and mooring the at least two nets by the longitudinal cables and the lateral cables, such that (i) the nets are arranged at intervals in the direction of a water flow of the torrent and (ii) each net is placed on the torrent bed so that meshes of the net engage with gravels on the torrent bed and gravels that come down from upstream regions onto the net.

2. A method as claimed in claim 1, wherein the at least one lodgment (2) is one of a tree, rock, and artificial structure.

3. A method as claimed in claim 1, wherein the longitudinal cables (1) are fixed indirectly to two lodgments (2) by connecting the two lodgments by an auxiliary cable (4) and connecting the longitudinal cables to the auxiliary cable.

4. A method as claimed in claim 1, further including the step of connecting fence members (6) to the nets (3) and/or the longitudinal (1) and lateral cables (5).

5. A method as claimed in claim 4, wherein each fence member (6) is a series of concrete blocks connected by elongated concertina wires filled with stones.

6. A method for controlling a torrent and preventing a torrent bed from being eroded, comprising:

7. A method as claimed in claim 6, for also preventing a shore from erosion, further comprising:
providing at least two stable second lodgments (7) alongside the torrent;
connecting at least two second nets (3) at upper sides thereof to the second lodgments so that the second nets hang on a surface of the shore; and
connecting the second nets at lower sides thereof to a third lodgment (7') fixed to at least one of the shore, the torrent bed, and one of the longitudinal cables.

8. A method as clamed in claim 7, further comprising the step of providing auxiliary members (9) moored between the second lodgments (7) and the third lodgment (7') or one of the longitudinal cables before or after the step of connecting the second nets (3) at the upper sides thereof to the second (7) lodgments

9. A method as claimed in claim 8, wherein each auxiliary member (9) to be moored is one of a sheet of cloth and a cover in the form of a bar blind having wood, concrete, or plastic bars.
fixing at least two longitudinal cables (1) directly or indirectly to at least one lodgment (2);
**characterised by** providing at least two substantially flat nets (3); and
mooring the nets by the longitudinal cables and mooring cables (8) connected to the longitudinal cables so that (i) the nets are arranged at intervals in the direction of a water flow of the torrent and (ii) each net is placed on the torrent bed so that meshes of the net engage with gravels on the torrent bed and gravels that come down from upstream regions onto the net.

10. A structure for controlling a torrent and preventing a torrent bed from being eroded, comprising:
at least one lodgment (2);
at least two longitudinal cables (1) directly or indirectly connected to the at least one lodgment; and
at least one lateral cable (5) connecting the longitudinal cables at intervals;
**characterised by** at least one substantially flat net (3), the number of nets corresponding to the number of lateral cables, moored by the longitudinal cables and the at least one lateral cable such that in use the at least one net is placed on the torrent bed so that meshes of the net engage with gravels on the torrent bed and gravels that come down from upstream regions onto the net.

11. A structure as claimed in claim 10, wherein the at least two longitudinal cables (1) are connected directly to the at least one lodgment (2).

12. A structure as claimed in claim 10, wherein the at least one lodgment (2) is one of a tree, rock, and artificial structure.

13. A structure as claimed in claim 10, further comprising an auxiliary cable (4) for connecting the longitudinal cables (1) indirectly to a plurality of lodgments (5).

14. A structure as claimed in claim 10, further comprising fence members (6) connected to the at least one net (3) and/or the longitudinal (1) and lateral cables (5).

15. A structure as claimed in claim 14, wherein each fence member (6) is a series of concrete blocks connected by elongated concertina wires filled with stones.

16. A structure for controlling a torrent and preventing a torrent bed from being eroded, comprising:
at least one lodgment (2); and
at least two longitudinal cables (1) directly or indirectly connected to the at least one lodgment;
**characterised by** at least one substantially flat net (3); and
mooring cables (8) connecting the at least one net to the longitudinal cables such that in use the at least one net is placed on the torrent bed so that meshes of the net engage with gravels on the torrent bed and gravels that come down from upstream regions onto the net.

## Patentansprüche

1. Verfahren zum Regulieren eines reißenden Flusses und Verhindern, dass ein Bett des reißenden Flusses erodiert wird, umfassend:
direktes oder indirektes Befestigen von mindestens zwei Längskabeln (1) an mindestens einer Festsetzungsstelle (2); und
in Abständen erfolgendes Verbinden der Längskabel durch mindestens zwei Querkabel (5);
**gekennzeichnet durch** Bereitstellen von mindestens zwei im Wesentlichen ebenen Netzen (3), wobei die Anzahl von Netzen der Anzahl von Querkabeln entspricht;
und Festmachen der mindestens zwei Netze **durch** die Längskabel und die Querkabel, so dass (i) die Netze in der Richtung einer Wasserströmung des reißenden Flusses in Abständen angeordnet werden und (ii) jedes Netz auf dem Bett des reißenden Flusses platziert wird, so dass Maschen des Netzes mit Geröllen auf dem Bett des reißenden Flusses und Geröllen, die von stromaufwärts gelegenen Gebieten auf das Netz herunterkommen, in Eingriff treten.

2. Verfahren nach Anspruch 1, bei dem die mindestens eine Festsetzungsstelle (2) eines von einem Baum, einem Felsen und einer künstlichen Struktur ist.

3. Verfahren nach Anspruch 1, bei dem die Längskabel (1) an zwei Festsetzungsstellen (2) indirekt befestigt werden, indem die zwei Festsetzungsstellen durch ein Hilfskabel (4) verbunden werden und die Längskabel mit dem Hilfskabel verbunden werden.

4. Verfahren nach Anspruch 1, weiter umfassend den Schritt: Verbinden von Schutzelementen (6) mit den Netzen (3) und/oder den Längs (1)- und Querkabeln (5).

5. Verfahren nach Anspruch 4, bei dem jedes Schutzelement (6) eine Reihe von Betonblöcken ist, die durch in die Länge gezogene Ziehharmonikadrähte verbunden werden, die mit Steinen gefüllt werden.

6. Verfahren zum Regulieren eines reißenden Flusses und Verhindern, dass ein Bett des reißenden Flusses erodiert wird, umfassend:
direktes oder indirektes Befestigen von mindestens zwei Längskabeln (1) an mindestens einer Festsetzungsstelle (2);
**gekennzeichnet durch** Bereitstellen von mindestens zwei im Wesentlichen ebenen Netzen (3); und
Festmachen der Netze **durch** die Längskabel und Festmachen von Kabeln (8), die mit den Längskabeln verbunden sind, so dass (i)'die Netze in der Richtung einer Wasserströmung des reißenden Flusses in Abstände angeordnet werden und (ii) jedes Netz auf dem Bett des reißenden Flusses platziert wird, so dass Maschen des Netzes mit Geröllen auf dem Bett des reißenden Flusses und Geröllen, die von stromaufwärts gelegenen Gebieten auf das Netz herunterkommen, in Eingriff treten.

7. Verfahren nach Anspruch 6, um ebenfalls zu verhindern, dass ein Ufer erodiert, weiter umfassend:
Bereitstellen von mindestens zwei stabilen zweiten Featsetzungsstellen (7) am reißenden Fluss entlang;
Verbinden von mindestens zwei zweiten Netzen (3) an ihren oberen Seiten mit den zweiten Festsetzungsstellen, so dass die zweiten Netze auf einer Oberfläche des Ufers hängen; und
Verbinden der zweiten Netze an ihren unteren Seiten mit einer dritten Festsetzungsstelle (7'), die an mindestens einem von dem Ufer, dem Bett des reißenden Flusses und einem der Längskabel befestigt ist.

8. Verfahren nach Anspruch 7, weiter umfassend den Schritt; Bereitstellen von Hilfselementen (9), die vor oder nach dem Schritt eines Verbindens der zweiten Netze (3) an ihren oberen Seiten mit den zweiten (7) Festsetzungsstellen zwischen den zweiten Festsetzungsstellen (7) und der dritten Festsetzungsstelle (7') oder einem von den Längskabeln festgemacht werden.

9. Verfahren nach Anspruch 8, bei dem jedes festzumachende Hilfselement (9) eines von einer Stofflage und einer Überdeckung in der Form einer Stabjalousie mit Holz-, Beton- oder Kunststoffstäben ist.

10. Struktur zum Regulieren eines reißenden Flusses und Verhindern, dass ein Bett des reisenden Flusses erodiert wird, umfassend:
mindestens eine Festsetzungsstelle (2);
mindestens zwei Längskabel (1), die mit der mindestens einen Festsetzungsstelle direkt oder indirekt verbunden sind; und
mindestens ein Querkabel (5), das die Längskabel in Abständen verbindet;
**gekennzeichnet durch** mindestens ein im Wesentlichen ebenes Netz (3), wobei die Anzahl von Netzen der Anzahl von Querkabeln entspricht, das **durch** die Längskabel und das mindestens eine Querkabel festgemacht ist, so dass beim Gebrauch das mindestens eine Netz auf dem Bett des reißenden Flusses platziert ist, so dass Maschen des Netzes mit Geröllen auf dem Bett des reißenden Flusses und Geröllen, die von stromaufwärts gelegenen Gebieten auf das Netz herunterkommen, in Eingriff treten.

11. Struktur nach Anspruch 10, bei der die mindestens zwei Längskabel (1) mit der mindestens einen Festsetzungsstelle (2) direkt verbunden sind.

12. Struktur nach Anspruch 10, bei der die mindestens eine Festsetzungsstelle (2) eines von einem Baum, einem Felsen und einer künstlichen Struktur ist.

13. Struktur nach Anspruch 10, weiter umfassend ein Hilfskabel (4), um die Längskabel (1) mit einer Mehrzahl von Festsetzungsstellen (5) indirekt zu verbinden.

14. Struktur nach Anspruch 10, weiter umfassend Schutzelemente (6), die mit dem mindestens einen Netz (3) und/oder den Längs (1)- und Querkabeln (5) verbunden sind.

15. Struktur nach Anspruch 14, wobei jedes Schutzelement (6) eine Reihe von Betonblöcken ist, die durch in die Länge gezogene Ziehharmonikadrähte verbunden sind, die mit Steinen gefüllt sind.

16. Struktur zum Regulieren eines reisenden Flusses und Verhindern, dass ein Bett des reißenden Flusses erodiert wird, umfassend:
mindestens eine Festsetzungsstelle (2); und
mindestens zwei Längskabel (1), die mit der mindestens einen Festsetzungsstelle direkt oder indirekt verbunden sind;
**gekennzeichnet durch** mindestens ein im Wesentlichen ebenes Netz (3); und
**durch** Befestigungskabel (8), die das wenigstens eine Netz an die Längskabel anbinden, so dass bei der Benutzung das wenigstens eine Netz auf dem Bett des reißenden Flusses platziert ist, so dass Maschen des Netzes mit Geröllen auf dem Bett des reißenden Flusses und Geröllen, die von stromaufwärts gelegenen Gebieten auf das Netz herunterkommen, in Eingriff treten.

## Revendications

1. Procédé pour contrôler un torrent et empêcher l'érosion du lit d'un torrent, comprenant :
fixer au moins deux câbles longitudinaux (1) directement ou indirectement à au moins un emplacement (2) ; et
relier les câbles longitudinaux par au moins deux câbles latéraux (5) selon des intervalles ;
**caractérisé par** la fourniture d'au moins deux filets sensiblement plats (3), le nombre de filets correspondant au nombre de câbles latéraux ;
et amarrer les au moins deux filets par les câbles longitudinaux et les câbles latéraux, de sorte que (i) les filets sont agencés selon des intervalles dans la direction d'un écoulement d'eau du torrent et (ii) chaque filet est placé sur le lit du torrent de sorte que des mailles du filet viennent en contact avec des graviers sur le lit du torrent et des graviers qui descendent des régions amont sur le filet.

2. Procédé selon la revendication 1, dans lequel le au moins un emplacement (2) est l'un parmi un arbre, un rocher et une structure artificielle.

3. Procédé selon la revendication 1, dans lequel les câbles longitudinaux (1) sont fixés indirectement à deux emplacements (2) en reliant les deux emplacements par un câble auxiliaire (4) et en reliant les câbles longitudinaux au câble auxiliaire.

4. Procédé selon la revendication 1, incluant en outre l'étape de relier des éléments de barrière (6) aux filets (3) et/ou aux câbles longitudinaux (1) et latéraux (5).

5. Procédé selon la revendication 4, dans lequel chaque élément de barrière (6) est une série de blocs de béton reliée par des fils en accordéon allongés remplis de pierres.

6. Procédé pour contrôler un torrent et empêcher l'érosion du lit d'un torrent, comprenant :
fixer au moins deux câbles longitudinaux (1) directement ou indirectement à au moins un emplacement (2) ;
**caractérisé par** la fourniture d'au moins deux filets sensiblement plats (3) ; et
amarrer les filets par les câbles longitudinaux et les câbles d'amarrage (8) reliés aux câbles longitudinaux de sorte que (i) les filets sont agencés selon des intervalles dans la direction d'un écoulement d'eau du torrent et (ii) chaque filet est placé sur le lit du torrent de sorte que des mailles du filet viennent en contact avec des graviers sur le lit du torrent et des graviers qui descendent des régions amont sur le filet.

7. Procédé selon la revendication 6, pour empêcher également l'érosion d'un rivage, comprenant en outre
fournir au moins deux deuxièmes emplacements stables (7) le long du torrent ;
relier au moins deux seconds filets (3) au niveau des côtés supérieurs de ceux-ci aux deuxièmes emplacements de sorte que les seconds filets s'accrochent sur une surface du rivage ; et
relier les seconds filets au niveau de côtés inférieurs de ceux-ci à un troisième emplacement (7') fixé à au moins l'un parmi le rivage, le lit du torrent, et l'un des câbles longitudinaux.

8. Procédé selon la revendication 7, comprenant en outre l'étape de fournir des éléments auxiliaires (9) amarrés entre les deuxièmes emplacements (7) et le troisième emplacement (7') ou l'un des câbles longitudinaux avant ou après l'étape de relier les seconds filets (3) au niveau des côtés supérieurs de ceux-ci aux deuxièmes emplacements (7).

9. Procédé selon la revendication 8, dans lequel chaque élément auxiliaire (9) à amarrer est l'un parmi une bâche de toile et un couvercle sous la forme d'un volet de barres ayant des barres en bois, en béton ou en plastique.

10. Structure pour contrôler un torrent et empêcher l'érosion du lit d'un torrent, comprenant :
au moins un emplacement (2) ;
au moins deux câbles longitudinaux (1) directement ou indirectement reliés à le au moins un emplacement ; et
au moins un câble latérale (5) reliant les câbles longitudinaux selon des intervalles ;
**caractérisée par** au moins un filet sensiblement plat (3), le nombre de filets correspondant au nombre de câbles latéraux, amarrés par l'intermédiaire des câbles longitudinaux et du au moins un câble latéral de sorte que en utilisation le au moins un filet est placé sur le lit du torrent de sorte que des mailles du filet viennent en contact avec des graviers sur le lit du torrent et des graviers qui descendent des régions amont sur le filet.

11. Structure selon la revendication 10, dans laquelle les au moins deux câbles longitudinaux (1) sont reliés directement au au moins un emplacement (2).

12. Structure selon la revendication 10, dans laquelle le au moins un emplacement (2) est l'un parmi un arbre, un rocher et une structure artificielle.

13. Structure selon la revendication 10, comprenant en outre un câble auxiliaire (4) pour relier les câbles longitudinaux (1) indirectement à une pluralité d'emplacements (5).

14. Structure selon la revendication 10, comportant en outre des éléments de barrière (6) reliés à au moins un filet (3) et/ou aux câbles longitudinaux (1) et latéraux (5).

15. Structure selon la revendication 14, dans laquelle chaque élément de barrière est une série de blocs de béton reliée par des fils en accordéon allongés remplis de pierres.

16. Structure pour contrôler un torrent et empêcher l'érosion du lit d'un torrent, comprenant :
au moins un emplacement (2) ; et
au moins deux câbles longitudinaux (1) directement ou indirectement reliés à le au moins un emplacement ;
**caractérisé par** au moins au filet sensiblement plat (3) ; et
des câbles d'amarrage reliant le au moins un filet aux câbles longitudinaux de sorte que en utilisation le au moins un filet est placé sur le lit du torrent de sorte que des mailles du filet viennent en contact avec des graviers sur le lit du torrent et des graviers qui descendent des régions amont sur le filet.
